# EUROPEAN PATENT APPLICATION

(11) **EP 3 297 127 A1**
(43) Date of publication of application: **21.03.2018**
(21) Application number: 17190490.7
(22) Date of filing: 11.09.2017
(51) Int. Cl.: H02J 50/10, G01F 15/04

(54) **NON-CONTACT POWER TRANSFER IN ELECTRONIC VOLUME CORRECTORS**

(30) Priority: 16.09.2016 US 201615267344
(71) Applicant: Honeywell International Inc., Morris Plains, NJ 07950 (US)
(72) Inventor: RAO, Aravind Hulisandra Sathyanarayana, Morris Plains, NJ New Jersey 07950 (US); KN, Dinesh Kumar, Morris Plains, NJ New Jersey 07950 (US)
(74) Representative: Houghton, Mark Phillip

(57) **Abstract**

A non-contact power transfer system and method for use in industrial and hazardous environments. In one example embodiment, a power pack can contain one or more power sources and one or more coils. A wireless power transmitting system is associated with an EVC. The wireless power transmitting system can be connected to the coil(s) and also maintained by the power pack. Power is transferrable in a non-contact manner from the wireless power transmitting system to a wireless power receiver system to provide power to the power source. This approach can be utilized for non-contact power transfer to industrial products such as EVCs. A primary source of power or for recharging a built in battery can be achieved without having to physically access the battery.

## Description

### TECHNICAL FIELD

Embodiments are related to electronic devices and systems utilized in industrial, explosive, and other hazardous environments. Embodiments also relate to EVCs (Electronic Volume Correctors) utilized in hazardous and industrial settings such as, for example, gas measurement systems. Embodiments further relate to the use of non-contact power transfer for EVCs in hazardous locations such as industrial and explosive areas.

### BACKGROUND

Oil and natural gas industry products, like many other electronics products, utilize a wide range of electrical and electromechanical machines and products, many of which are installed in hazardous locations including explosive atmospheric environments. A potentially explosive atmosphere exists when a mixture of air gases, vapors, mists, or dusts combine in a manner that may ignite under certain operating conditions. Equipment and protective systems intended for use in potentially explosive atmospheres (e.g., ATEX/IEC) cover a range of products, including those utilized in, for example, fixed offshore platforms, petrochemical plants, mines, and flour mills, amongst others. Products implemented in such conditions are defined by ATEX standards.

Many of these products are battery operated and support main power configurations as well as battery power. In certain cases, especially for products which need to preserve functionality and/or data, a back-up battery option may be required to ensure on-process changing of a main-battery while continuing operations during a main power outage.

The handling of a power supply is critical with EVCs, particularly in explosive environments (e.g., "Zone 0"). Most EVCs are battery operated and usually powered by primary batteries. These batteries have huge amounts of energy stored to run the EVCs for long durations like 5-10 years.

Special care must be taken in circuit design in dealing with these high energy batteries to render them intrinsically safe during operation. Also, replacing these batteries in the field requires special care in handling. Additionally, due to regulatory constraints, shipping/availability of lithium batteries may be difficult in some regions/countries. To replace the battery, a metrology seal may be required to be broken as it may be placed inside the unit usually, which can result in additional overhead and costs, if the replacement does not coincide with a calibration cycle. In certain geographies, a special procedure may need to be followed for the replacement of these batteries, which can also add to the maintenance time and expense.

### BRIEF SUMMARY

The following summary is provided to facilitate an understanding of some of the innovative features unique to the disclosed embodiments and is not intended to be a full description. A full appreciation of the various aspects of the embodiments disclosed herein can be gained by taking the entire specification, claims, drawings, and abstract as a whole.

It is, therefore, one aspect of the disclosed embodiments to provide for an improved system and method for power industrial products, such as EVCs, using a non-contact transfer of power.

It is another aspect of the disclosed embodiments to provide for a primary source of power or for the recharging of built in batteries without having to physically access such batteries.

It is also an aspect of the disclosed embodiments to provide for a non-contract power transfer system and method that can eliminate the need for primary batteries and replacement in the field of such batteries, particular in hazardous locations.

The aforementioned aspects and other objectives and advantages can now be achieved as described herein. A system and method for power industrial products, such as EVCs, using a non-contact power transfer approach is disclosed herein. In an example embodiment, a non-contact power transfer system associated with an EVC can be implemented, which includes a power pack that contains one or more power sources and one or more coils, and a wireless power transmitting system connected to the coil(s) and maintained by the power pack. Power is transferrable in a non-contact manner from the wireless power transmitting system to a wireless power receiver system via the coil(s) as to provide power to the power source.

This approach can be implemented in the context of either a primary source of power or for recharging a built-in battery without having to physically access the battery. This would eliminate the need of using primary batteries and replacing them in the field especially in hazardous locations.

### BRIEF DESCRIPTION OF THE DRAWINGS

The accompanying figures, in which like reference numerals refer to identical or functionally-similar elements throughout the separate views and which are incorporated in and form a part of the specification, further illustrate the present invention and, together with the detailed description of the invention, serve to explain the principles of the present invention.
FIG. 1 illustrates a schematic diagram depicting example systems for powering industrial products utilized in industrial and explosive environments, in accordance with an example embodiment; and
FIG. 2 illustrates a schematic diagram of a wireless charging system, which can be implemented in accordance with an example embodiment.

### DETAILED DESCRIPTION

The particular values and configurations discussed in these non-limiting examples can be varied and are cited merely to illustrate one or more embodiments and are not intended to limit the scope thereof.

Subject matter will now be described more fully hereinafter with reference to the accompanying drawings, which form a part hereof, and which show, by way of illustration, specific example embodiments. Subject matter may, however, be embodied in a variety of different forms and, therefore, covered or claimed subject matter is intended to be construed as not being limited to any example embodiments set forth herein; example embodiments are provided merely to be illustrative. Likewise, a reasonably broad scope for claimed or covered subject matter is intended. Among other things, for example, subject matter may be embodied as methods, devices, components, or systems. Accordingly, embodiments may, for example, take the form of hardware, software, firmware or any combination thereof (other than software per se). The following detailed description is, therefore, not intended to be interpreted in a limiting sense.

Throughout the specification and claims, terms may have nuanced meanings suggested or implied in context beyond an explicitly stated meaning. Likewise, the phrase "in one embodiment" as used herein does not necessarily refer to the same embodiment and the phrase "in another embodiment" as used herein does not necessarily refer to a different embodiment. It is intended, for example, that claimed subject matter include combinations of example embodiments in whole or in part.

In general, terminology may be understood, at least in part, from usage in context. For example, terms such as "and," "or," or "and/or" as used herein may include a variety of meanings that may depend, at least in part, upon the context in which such terms are used. Typically, "or" if used to associate a list, such as A, B, or C, is intended to mean A, B, and C, here used in the inclusive sense, as well as A, B, or C, here used in the exclusive sense. In addition, the term "one or more" as used herein, depending at least in part upon context, may be used to describe any feature, structure, or characteristic in a singular sense or may be used to describe combinations of features, structures, or characteristics in a plural sense. Similarly, terms such as "a," "an," or "the," again, may be understood to convey a singular usage or to convey a plural usage, depending at least in part upon context. In addition, the term "based on" may be understood as not necessarily intended to convey an exclusive set of factors and may, instead, allow for existence of additional factors not necessarily expressly described, again, depending at least in part on context.

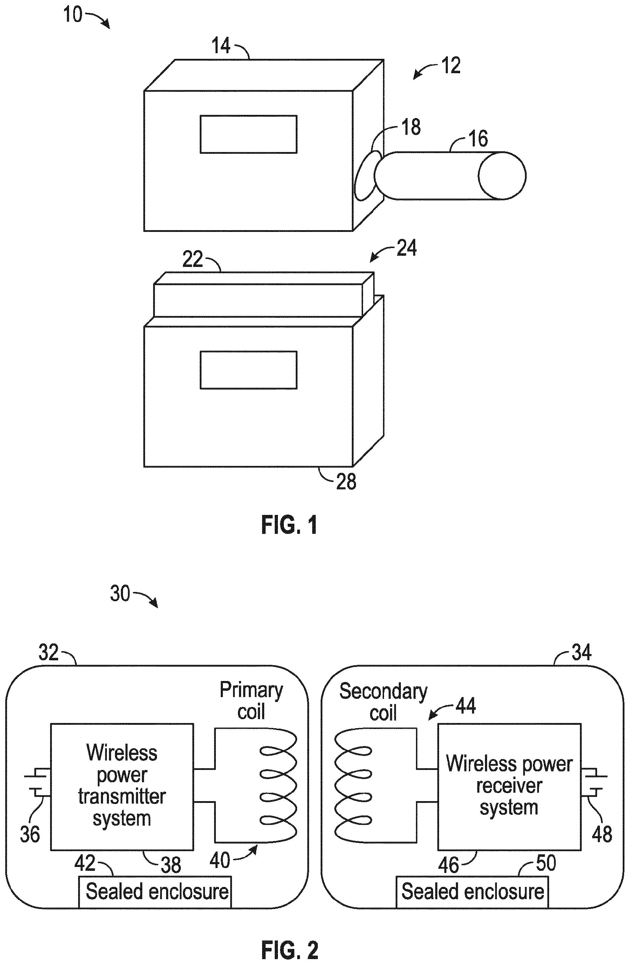

FIG. 1 illustrates a schematic diagram 10 depicting example systems 12 and 24 for powering industrial products utilized in industrial and explosive environments, in accordance with an example embodiment. The example systems 12 and 24 shown in FIG. 1 can leverage wireless charging techniques including the transfer of energy via electromagnetic waves similar to that of a transformer. The source is analogous to the primary of a transformer, while a receiver (i.e., a power supply section inside an EVC) would be the secondary to the analogous transformer. In such a system, the power supply of the EVC can be replaced or recharged without compromising on the intrinsic safety because there is no physical contact to the high energy source. This also avoids exposure of terminals in the field. Additionally, by having such a modular approach we can avoid breaking the metrology seal (opening the unit basically).

Thus, two scenarios are shown in FIG. 1. First, the example system 12 depicted in FIG. 1 includes a unit 14 (e.g., an EVC unit) having a receptacle 18 that receives a battery pack 16. The sealed battery pack 16 can be configured to power an EVC utilizing non-contact power transfer, as discussed herein. In the example system 24 shown in FIG. 1, the unit 28 (e.g., an EVC unit) can be powered by a battery pack 22, which is the source of the power containing a source (e.g., primary battery, secondary battery, or a main powered DC power supply with, for example, DC power protected for use in a hazardous environment), and a supporting mechanism for transferring the power into the unit, which is chargeable "in the field".

In the case of unit 14, the battery 16 may be implemented as a non-contact battery pack, and may be implemented as a sealed modular high-energy battery pack that is capable of being easily and safely replaced in the field. In the case of unit 24, EVCs can be fitted with rechargeable batteries such as battery 22. Such a battery can be charged via a non-contact method. In some example embodiments, the power source may be a locally available alkaline battery.

Thus, replacing of batteries, especially lithium-based batteries, can be avoided. These techniques can be extended to, for example, "Zone 0" handheld devices. Note that "Zone 0" refers to an area in which an explosive gas atmosphere is present continuously or for long periods.

It can be appreciated that the units 14 and 22 shown in FIG. 1 can be implemented in the context of a number of different types of units. For example, in some embodiments, units 14 and/or 22 can be implemented as an EVC that communicates wirelessly with, for example, other wireless devices (e.g., smartphones, tablet computing devices, laptop computers, etc.) and wireless networks (e.g., WLAN, cellular networks, etc.). The units 14 and 22, for example, can extend to products such as handhelds and other mobile devices utilized in explosive atmospheres such as safe applications such as a gas sensor, and so on. Thus, one of the unique features of the disclosed embodiments is their use in industrial environments to achieve a much more useful and safe applications as well as convenient powering/recharging of units operating in, for example, an explosive environment.

FIG. 2 illustrates a schematic diagram of a wireless charging system 30, which can be implemented in accordance with an example embodiment. The system 30 can be composed of two units 32 and 34 each having their own respective power sources 36 and 48. Each of the units 32 and 34 may include, for example, respective sealed enclosures 42 and 50. The power sources 36 and 48 may each be implemented as primary batteries of any chemistry, or as rechargeable batteries, or as a DC power source (via a barrier), or a combination thereof. Unit 32 of the wireless charging system 30 includes a wireless power transmitted system 38 that is operably connected to the power source 36 and to a primary coil 40. The wireless power transmitter system 38 can be implemented as an electronic circuit that includes one or more wireless power transmitter ICs (Integrated Circuits) and associated circuit. For example, there are several ICs available, which can transmit power from a few mW to 5W to 10W.

The unit 34 includes a secondary coil 44 that is operably connected to a wireless power receiver system 46, which in turn is operably connected to the power source 48. The primary coil 32 and the secondary coil 44 can be implemented each as, for example, as an inductive coil or as a PCB track or a group of PCB tracks laid out in a specific pattern to emulate a coil. With PCB tracks, the solution becomes increasingly compact. The wireless power receiver system 48 can be implemented as, for example, an IC (or a group of ICs) and its associated circuitry.

In the wireless charging system 30, which implements a non-contact power transfer (also known as a wireless power transfer); the transfer of power can occur utilizing the same principal as in a transformer. That is, the source and the receiver are the primary and secondary of the transformer correspondingly. The DC power is converted into AC to transfer the power across the physical barrier and is converted back to DC on the receiver end. Special ICs can be utilized efficiently achieve wireless power transfer.

Depending on the design implementation, each of the units 32 and 34 can be equipped with a receiver/reservoir (not shown in FIG. 2). Depending on the usage scenario, this may involve a storage device such as a rechargeable battery, a super capacitor, or simply the main power section of the unit.

Two usage scenarios can be considered. In a first usage scenario, reference can be made to system 24 shown in FIG. 1. In this first usage scenario, assume that unit 24 constitutes an EVC and that the battery 22 constitutes a rechargeable battery. In this example, the battery 22 can be charged wirelessly "in the field" using a sealed power source by placing the power source physically close to the EVC. The time taken to charge the interval between charges is a limitation of currently available technology, which soon will be sufficient enough to last as long as a typical battery life. Additionally, it can be appreciated that the receiver unit (e.g., such as the wireless power system 46 shown in FIG. 1) can be completely sealed, and thus a higher capacity power source can be used even in intrinsically safe zones.

In a second usage scenario, the non-contact source itself can be the primary source of power to the unit 14 shown in FIG. 1. This implementation can be in the form of a cartridge that can slide into the unit 14. The unit 14 can then be powered wirelessly. A mechanism to detect the power level (via a simple wireless protocol) can be employed with the replacement of battery without loss of functionality or data. This scenario can also involve the use of an IIoT (Industrial Internet of Things) module to communicate the health of the battery to the base for maintenance.

Note that the term "IIoT" refers to Industrial Internet of Things, which is the use of Internet of Things (loT) technologies in manufacturing. Also known as the Industrial Internet, IIoT incorporates machine learning and "big data" technology, harnessing sensor data, machine-to-machine (M2M) communication, and automation technologies that have existed in industrial settings for years. The driving philosophy behind the IIoT is that "smart" machines are better than humans at accurately, consistently capturing and communicating data. This data can enable companies to pick up on inefficiencies and problems sooner, saving time and money and supporting business intelligence efforts. In manufacturing specifically, IIoT holds great potential for quality control, sustainable and green practices, supply chain traceability, and overall supply chain efficiency. Thus, the package 16 can be implemented in some example embodiments as integrated battery package made up of a battery and an IIoT module wherein the IIoT module communicates electronically with the battery and wirelessly with industrial wireless networks and/or other types of wireless networks.

Based on the foregoing, it can be appreciated that a number of embodiments, preferred and alternative, are disclosed herein. For example, in one embodiment, a non-contact power transfer system for use in industrial and hazardous environments can be implemented. Such a system can include, for example, a power pack that contains at least one power source and at least one coil; and a wireless power transmitting system associated with an EVC (Electronic Volume Corrector), wherein the wireless power transmitting system is connected to the at least one coil and maintained by the power pack. The power is transferrable in a non-contact manner from the wireless power transmitting system to a wireless power receiver system via the at least one coil so as to provide power to the at least one power source and allow the non-contact power system to be safely utilized in an industrial or hazardous environment.

In another example embodiment, a non-contact power transfer system for use in industrial and hazardous environments can be implemented which includes a power pack that contains at least one power source and at least one coil, wherein the at least one power source comprises a primary battery and a secondary battery; and a wireless power transmitting system associated with an EVC (Electronic Volume Corrector), wherein the wireless power transmitting system is connected to the at least one coil and maintained by the power pack, such that power is transferrable in a non-contact manner from the wireless power transmitting system to a wireless power receiver system via the at least one coil so as to provide power to the at least one power source and allow the non-contact power system to be safely utilized in an industrial or hazardous environment. The primary battery can be connected electrically to the wireless power transmitter system and the secondary battery is connected electrically to the wireless power receiver system.

In yet another example embodiment, a non-contact power transfer method or process for use in industrial and hazardous environments can be implemented. Such an example method or process can include steps or operations such as initially configuring a power pack to contain at least one (i.e., one or more) power source and at least one coil; and associating a wireless power transmitting system with an EVC (Electronic Volume Corrector), such that the wireless power transmitting system is connected to the at least one coil and is maintained by the power pack. In such a method/process, power is transferrable in a non-contact manner from the wireless power transmitting system to a wireless power receiver system via the at least one coil so as to provide power to the at least one power source and allow the non-contact power system to be safely utilized, for example, in an industrial or hazardous environment as described herein.

The foregoing description of the embodiments has been provided for purposes of illustration and description. It is not intended to be exhaustive or to limit the disclosure. Individual elements or features of a particular embodiment are generally not limited to that particular embodiment, but, where applicable, are interchangeable and can be used in a selected embodiment, even if not specifically shown or described. The same may also be varied in many ways. Such variations are not to be regarded as a departure from the disclosure, and all such modifications are intended to be included within the scope of the disclosure.

## Claims

1. A non-contact power transfer system for use in industrial and hazardous environments, comprising:
a power pack that contains at least one power source and at least one coil; and
a wireless power transmitting system associated with an EVC (Electronic Volume Corrector), wherein said wireless power transmitting system is connected to said at least one coil and maintained by said power pack, such that power is transferrable in a non-contact manner from said wireless power transmitting system to a wireless power receiver system via said at least one coil so as to provide power to said at least one power source and allow said non-contact power system to be safely utilized in an industrial or hazardous environment.

2. The system of claim 1 wherein said at least one power source comprises a primary battery connected electrically to said wireless power transmitter system.

3. The system of claim 1 wherein said at least one power source comprises a secondary battery connected electrically to said wireless power receiver system.

4. The system of claim 1 wherein said at least one power source comprises a DC source.

5. The system of claim 1 wherein said at least one power source comprises a rechargeable battery.

6. The system of claim 1 wherein said at least one power source comprises a primary power source.

7. The system of claim 1 further comprising an IIoT (Industrial Internet of Things) interface located on said power pack to communicate a health of said power pack to a server through a network.

8. A non-contact power transfer system for use in industrial and hazardous environments, comprising:
a power pack that contains at least one power source and at least one coil, wherein said at least one power source comprises a primary battery and a secondary battery; and
a wireless power transmitting system associated with an EVC (Electronic Volume Corrector), wherein said wireless power transmitting system is connected to said at least one coil and maintained by said power pack, such that power is transferrable in a non-contact manner from said wireless power transmitting system to a wireless power receiver system via said at least one coil so as to provide power to said at least one power source and allow said-non contact power system to be safely utilized in an industrial or hazardous environment; and wherein primary battery is connected electrically to said wireless power transmitter system and said secondary battery is connected electrically to said wireless power receiver system.

9. The system of claim 8 further comprising an IIoT (Industrial Internet of Things) interface located on said power pack to communicate a health of said power pack to a server through a network.

10. A non-contact power transfer method for use in industrial and hazardous environments, said method comprising:
configuring a power pack to contain at least one power source and at least one coil; and
associating a wireless power transmitting system with an EVC (Electronic Volume Corrector), wherein said wireless power transmitting system is connected to said at least one coil and maintained by said power pack, such that power is transferrable in a non-contact manner from said wireless power transmitting system to a wireless power receiver system via said at least one coil so as to provide power to said at least one power source and allow said non-contact power system to be safely utilized in an industrial or hazardous environment.
